# EUROPÄISCHE PATENTSCHRIFT

(11) **EP 0 829 151 B1**
(45) Veröffentlichungstag und Bekanntmachung des Hinweises auf die Patenterteilung: **05.11.2003**
(21) Anmeldenummer: 96919615.3
(22) Anmeldetag: 30.05.1996
(51) Int. Cl.: H04L 9/00

(54) **VERFAHREN ZUR VERSCHLÜSSELUNG VON FOLGEN, DIE AUS ZAHLENKODIERTEN INFORMATIONSEINHEITEN BESTEHEN**
METHOD OF ENCODING SEQUENCES CONSISTING OF FIGURE-CODED DATA UNITS
PROCEDE DE CODAGE DE SEQUENCES COMPOSEES D'UNITES DE DONNEES A CODAGE NUMERIQUE

(30) Priorität: 01.06.1995 DE 19520232
(43) Veröffentlichungstag der Anmeldung: 18.03.1998
(73) Patentinhaber: SIEMENS AKTIENGESELLSCHAFT, 80333 München (DE)
(72) Erfinder: BOCIONEK, Siegfried, D-91056 Erlangen (DE); KARLS, Ingolf, D-85622 Feldkirchen (DE); SCHÜTT, Dieter, D-81825 München (DE); LATOCHA, Wanda, D-81739 München (DE)
(86) Internationale Anmeldenummer: DE9600951
(87) Internationale Veröffentlichungsnummer: WO96038946

(56) Entgegenhaltungen:
- TRANSACTIONS OF THE INSTITUTE OF ELECTRONICS, INFORMATION AND COMMUNICATION ENGINEERS E, JULY 1990, JAPAN, Bd. E73, Nr. 7, ISSN 0913-574X, Seiten 1041-1044, XP000159215 HABUTSU T ET AL: "A secret key cryptosystem using a chaotic map" in der Anmeldung erwähnt

## Beschreibung

Die Erfindung bezieht sich auf ein Verfahren, mit dem zahlenkodierte Informationseinheiten, wie beispielsweise ASCII-Zeichen, verschlüsselt werden können. Das Verfahren kann jedoch auch für beliebige andere Informationseinheiten eingesetzt werden, die zuvor auf eindeutige Weise mit einem Zahlenkode identifizierbar gemacht werden.

Der moderne Mensch wird mit immer mehr Kommunikationsdienstleistungen und Kommunikationsmöglichkeiten konfrontiert. Als Beispiele hierfür seien vernetzte Personalcomputer, Homebanking und Internet genannt. Mit zunehmender Gewöhnung an diese Kommunikationstechnologien, wird auch der Freizeitsektor ein hohes Kommunikationsaufkommen beanspruchen. Als Beispiele hierfür seien Multimedia und Video on demand genannt. Bei vermehrter Akzeptanz der vernetzten Systeme durch den Konsumenten und damit steigendem Kommunikationsaufkommen auf den verschiedensten Verbindungswegen, gebührt der Datensicherheit eine immer höhere Wertigkeit. Besonders gefragt sind in diesem Zusammenhang Verschlüsselungsverfahren, mit denen zu übertragene Daten verschlüsselt werden können. Im Zusammenhang mit Konsumentenanwendungen sind besonders Verschlüsselungstechnologien gefragt, welche einfach und ohne hohen Rechenaufwand umzusetzen sind.

Ein wichtiger Aspekt der Verschlüsselungstechnologie besteht darin, daß ein Empfänger für den die verschlüsselte Information nicht bestimmt ist, keinen Zugriff auf die Informationen enthält. Es wird deshalb versucht, die Informationen so zu verschlüsseln, daß ein fremder Empfänger ohne Kenntnis bestimmter Schlüsselparameter diese Informationen nicht entziffern kann.

Von den Autoren Toshiki Habutso, Yoshifumi Nishio, Iwao Sase und Shinsako Mori, wird ein Secret Key Cryptosystem unter Zuhilfenahme der Iteration einer chaotischen Karte beschrieben. Dort wird ein Schlüssel, welcher zur Verschlüsselung von Informationen benutzt wird, unter Zuhilfenahme einer Chaosfunktion, die sich in einer Chaoskarte wiederfindet, ermittelt. Ein weiterer Stand der Technik ist hierzu nicht bekannt.

Die der Erfindung zugrundeliegende Aufgabe besteht darin, ein Verschlüsselungsverfahren für zahlenkodierte Informationseinheiten anzugeben, welches einfach durchzuführen ist und eine hohe Sicherheit bietet, wobei zur Verschlüsselung der Informationseinheiten eine Funktion verwendet werden soll, welche sich unter Zugrundelegung ihrer Funktionswerte nicht herleiten läßt.

Diese Aufgabe wird gemäß den Merkmalen des Patentanspruchs 1 gelöst.

Weiterbildungen der Erfindung ergeben sich aus den abhängigen Ansprüchen.

Besonders vorteilhaft wird durch das erfindungsgemäße Verfahren ein Verschlüsselungsverfahren angegeben, bei dem sich ein Verschlüsseler und ein Entschlüsseler auf eine Funktion, deren Parameter und Startwerte, sowie auf eine Übertragungsmatrix einigen und auf eine Weise, wie diese mit Werten belegt werden soll. Nur in Kenntnis dieser Parameter ist es einem Entschlüsselnden möglich, sich dieses Grundraster aufzubauen, um so durch einen Vergleich verschlüsselte Informationen entziffern zu können. Vorteilhafterweise werden dabei bestimmte Zellen dieser Grundmatrix in Abhängigkeit der zahlenkodierten Informationseinheiten verändert und damit nur in Kenntnis der Grundmatrix entschlüsselbar für einen Empfänger. Diese Grundmatrix ist jedoch einem fremden nicht zugänglich, da sie über eine mehrfach rückgekoppelte Funktion, wie beispielsweise eine Chaosfunktion oder eine andere geeignete komplexe Funktion mit Werten belegt wird.

Eine einfache und deshalb leicht durchführbare Lösung für das Problem der Erfindung bietet sich in Form einer zweidimensionalen oder mehrdimensionalen Matrix an, wobei die Matrixindizes der Verschlüsselungszellen auf eindeutige Weise mittels einer umkehrbaren Funktion mit den Zahlenkodes der Informationseinheiten verknüpft werden. Zur Herstellung der Eindeutigkeit werden vorteilhafterweise die zu verschlüsselten Matrixzellen so gefunden, daß die vorangehenden Verschlüsselungszellen berücksichtigt werden.

Um Rechenaufwand zu sparen, ist es günstigerweise vorgesehen, die Iteration mit der rückgekoppelten Funktion nur solange durchzuführen, bis ein bestimmter Grenzwert über- oder unterschritten wird. Dies geschieht in Abhängigkeit des Funktionsverlaufs der rückgekoppelten Funktion.

Vorteilhafterweise wird das erfindungsgemäße Verfahren nach einer festgelegten Anzahl von Iterationen abgebrochen und der dann vorliegende Funktionswert zur Verschlüsselung benutzt, um Konvergenzprobleme und damit verbundene Endlosschleifen beim Berechnen der Funktionswerte zu vermeiden.

Günstigerweise ist es beim Verfahren nach der Erfindung vorgesehen, die Matrixindizes mit der Kodezahl zu verknüpfen, da eine Addition beispielsweise durch eine einfache Schiebeoperation in einem Register und damit schnell durchführbar ist. Besonders günstig ist es beim erfindungsgemäßen Verfahren den Wert einer Matrixzelle, welche der Verschlüsselung dient, nur sehr geringfügig zu ändern, da damit einem potentiellen fremden Zugreifer die Entschlüsselung stark erschwert wird.

Günstigerweise ist es beim erfindungsgemaßen Verfahren vorgesehen, den Verschlüsselungswert einer Matrixzelle von der Anzahl der bereits zuvor verschlüsselten Informationseinheiten abhängig zu machen, da so einem potentiellen Zugreifer auf die Daten das Entschlüsseln weiter erschwert wird. Eine weitere Komplikation in diesem Zusammenhang stellt die Verwendung einer Chaosfunktion zur Festlegung des Verschlüsselungswertes dar.

Besonders vorteilhaft läßt sich die zu verschlüsselte Funktion in einem Bild verstecken, welches mit Hilfe einer Chaosfunktion erzeugt wurde, wobei die Matrixzellen in bekannter Weise in der zweidimensionalen Matrix des Bildes festgelegt werden und die Verschlüsselung in Form einer Erhöhung oder Erniedrigung der Grau- bzw. Farbwerte durchgeführt wird.

Besonders vorteilhaft ist es vorgesehen, den Verschlüsselungswert von der Anzahl der möglichen Grauwerte bzw. Farbwerte abhängig zu machen, und ihn mit der maximalen Zahl der möglichen Grauwerte zu skalieren, da so das Informationsdelta für die Entschlüsselung möglichst gering ist und somit eine Entschlüsselung durch fremde Zugreifer weiter erschwert wird.

Besonders vorteilhaft lassen sich durch nach dem erfindungsgemäßen Verfahren hergestellte Bildmatrizen, Bilddatensätze oder Bilder schützen, da diese auch versteckt an bestimmten Stellen eines Bildes oder eines Bilddatensatzes untergebracht werden können.

Vorteilhaft wird eine Informationsfolge, welche nach dem erfindungsgemäßen Verfahren verschlüsselt wurde, durch einen Entschlüsseler entschlüsselt, dem zuvor die gewählten Verschlüsselungsparameter und die entsprechenden Funktionen bekannt gemacht wurden. Da diese nicht von einem Fremden aus den Funktionswerten herleitbar sind, wobei dieser bereits Schwierigkeiten mit der Art der Verschlüsselung haben dürfte, ist das erfindungsgemäße Verfahren besonders sicher.

Im folgenden wird die Erfindung anhand von Figuren weiter erläutert.
Figur 1 zeigt dabei ein einfaches Beispiel einer Verschlüsselung nach dem erfindungsgemäßen Verfahren.
Figur 2 zeigt schematisiert den Weg der Daten beim Verschlüsseln und beim Entschlüsseln.
Figur 3 gibt ein Ausführungsbeispiel des erfindungsgemäßen Verfahrens zur Verschlüsselung von Daten an.
Figur 4 zeigt ein Beispiel eines erfindungsgemäßen Verfahrens zur Entschlüsselung von Daten.
Figur 5 gibt eine erfindungsgemäße Matrix als Grauwertbild ohne verschlüsselte Informationen an.
Figur 6 zeigt eine erfindungsgemäße Matrix, welche in Form von Grauwerten verschlüsselte Informationen enthält.

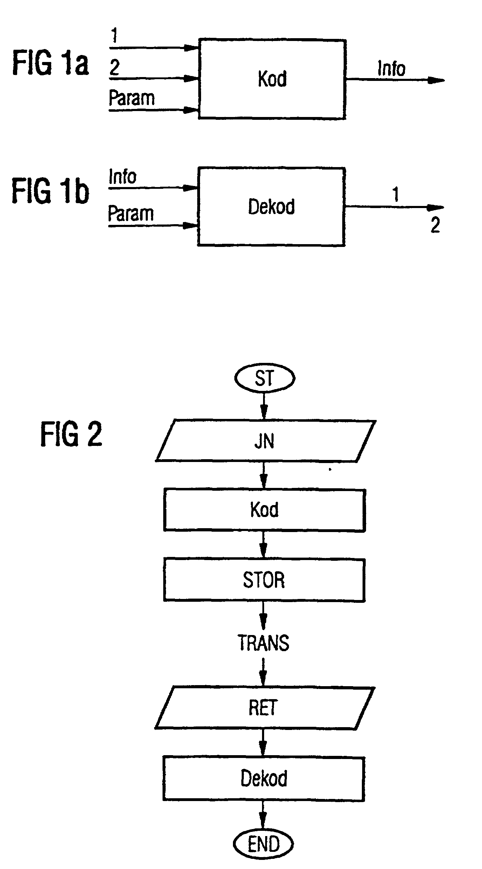

Figur 1 zeigt schematisiert dargestellt die Ver- und Entschlüsselung von Informationseinheiten nach dem erfindungsgemäßen Verfahren. Die Verschlüsselung nach dem erfindungsgemäßen Verfahren kann beispielsweise als Informationsüberlagerung verstanden werden. Die zu überlagernde Grundinformation besteht dabei in den Werten, welche in der Matrix auf Basis der Chaosfunktion, der komplexen Funktion, oder einer anderen rückgekoppelten Funktion erzeugt werden. Die weitere Information ist die eigentliche zu verschlüsselnde Information, welche in Form von zahlenkodierten Informationseinheiten, z.B. Text in ASCII-Format vorliegt. Es sind jedoch mit dem erfindungsgemäßen Verfahren auch beliebige andere zahlkodierbare Informationen, wie z.B. Musik in digitaler Form übertragbar.

Figur 1a zeigt dabei beispielsweise den Überlagerungsvorgang in einem Baustein Kod. Dem Baustein werden zwei getrennte Informationen 1 und 2 und eine Parametermenge zur Initialisierung und Steuerung der komplexen, Chaos oder anderen rückgekoppelten Funktionen zugeführt. Mit Hilfe der Ausgangsparameter und der rückgekoppelten Funktion erzeugt der Informationsüberlagerungsbaustein Kod eine Matrix, die flächig oder mehrdimensional ist, so daß man am Ende eine Matrix erhält, welche komplett mit Werten belegt ist, die sich beispielsweise durch Einsetzen der Matrixindices in die Funktion ergeben. Beispielsweise kann die Chaosfunktion mehrmals ausgeführt werden, bis ein bestimmter Grenzwert über- oder unterschritten wurde und der darauffolgende Wert kann in eine Matrixzelle eingetragen werden. Weiterhin kann, falls bei mehrmaliger Anwendung der in Funktion kein Grenzwert überschritten wird, eine Ausnahmebehandlung vorgesehen sein, welche vorsieht, daß das erfindungsgemäße Verfahren eine bestimmte Anzahl der Iterationen durchführt und den Wert nimmt, der dann nach dieser Anzahl von der Funktion geliefert wird, um die Matrixzelle zu belegen. Diese Vorgehensweise und die Anwendung einer solchen Funktion bietet den großen Vorteil, daß für unberechtigte Datenzugreifer keine Möglichkeit besteht dieselbe wertbelegte Matrix zu erzeugen, wenn sie nicht die Ausgangsparameter und die Initialisierungswerte kennen. Besonders wichtig beim erfindungsgemäßen Verfahren ist es also, daß sowohl der Sender als auch der Empfänger sich auf eine eindeutige festgelegte Verfahrensweise geeignet haben. Einigung muß beispielsweise erzielt werden über die Funktion über den Initalisierungswert der Funktion und über die Art und Weise in welcher Form die Matrixwerte verändert werden, so daß beim Entschlüsseln aus der Veränderung des Matrixwertes und der Zusammenhänge zwischen den einzelnen belegten Matrixverschlüsselungszellen der Zahlenkode der Informationseinheiten wiedergewonnen werden kann. Es ist also wichtig, festzulegen, in welcher Art die Zahlenkodes mit den Positionen der Matrixzellen verknüpft werden, um beim Entschlüsseln in umgekehrter Weise aus den unterschiedlichen veränderten Martixzellen die Zahlenkodes wiedergewinnen zu können.

Nach Durchlaufen beispielsweise der Informationen 1 und 2, die im Überlagerungsbaustein Kod mit Hilfe der Parameter und der rückgekoppelten Funktion verändert werden, ergibt sich ein einheitlicher Informationsstrom, welcher die verschlüsselte Information enthält. Es ist dabei unwesentlich wieviel Informationsströme in den Überlagerungsbaustein eintreten. Wesentlich jedoch ist, nach welcher Weise diese beiden Informationsströme verknüpft werden.

Bei einem Empfänger wird dann mit Hilfe derselben Parameter Param, mit welchen zuvor, wie in Figur 1a gezeigt, dieser Informationsstrom verschlüsselt worden ist entschlüsselt. Dazu wird info einem Informationsseparierungsbaustein Dekod zugeführt. Dieser Sachverhalt wird in Figur 1b dargestellt. Durch Anwendung des erfindungsgemäßen Verfahrens, in dem beispielsweise nun dieselbe Matrix, wie in Figur 1a erzeugt wird, erhält man die Grundmatrix. Durch Vergleich des Informationsstromes Info mit der Grundmatrix, welche mit Hilfe der Parameter Param erzeugt wurde, erhält man sofort die Zellen, welche zur Verschlüsselung der Information verändert wurden. Nachdem der Empfänger nun weiß, in welcher Weise die Matrixzellen zur Verschlüsselung der Information nacheinander belegt wurden, kann er, wenn er diese Reihenfolge umkehrt, die Zahlenkodes der Informationseinheiten wieder gewinnen und so Informationseinheit für Informationseinheit aneinanderreihen, um schließlich die Folge aus Informationseinheiten zu erhalten, die zu Beginn vom Absender verschlüsselt wurde.

Beispielsweise kann beim Verschlüsseln eine flächige Matrix schlicht Reihe für Reihe und Zelle für Zelle durchgezählt werden. Der ersten Werte eines Textes wären dann beispielsweise dann in die Matrixzelle einzutragen, die seinem ASCII-Zahlenwert entspricht. Diese Matrixzelle enthält nun beispielsweise den Wert, der ihr durch die Chaosfunktion zugewiesen wurde und wird nun entsprechend verändert, so daß der Empfänger dann feststellen kann, daß hier in dieser Zelle eine Änderung vorgenommen wurde. Beim Entschlüsseln kann der Empfänger dann aus der Position der Zelle in der Matrix schließen, welches ASCII-Zeichen dieser Zelle zugeordnet war. Das nächste zu verschlüsselte ASCII-Zeichen in der Informationsfolge wird dann beispielsweise beginnend von der aktuellen Position der Verschlüsselungszelle in jener Zelle eingetragen, deren Position sich daraus ergibt, daß zur gegenwärtigen Position der Verschlüsselungszelle der ASCII-Wert des folgenden Zeichens hinzu addiert wird. Falls dabei das Zeilenende der flächigen Matrix erreicht wird, wird einfach in der nächsten Zeile, die auf diese folgt, weitergezählt. Das hier beschriebene Verfahren zur Kodierung und Dekodierung stellt eine sehr einfache Variante dar. Es ist durchaus vorstellbar, daß mehrdimensionale Matrizen verwendet werden und daß nicht einfach von einer zur nächsten Zelle weitergezählt wird, sondern daß praktisch räumlich, also mehrdimensional verzweigt werden kann. Es ist lediglich wichtig, daß der Sender und der Empfänger wissen, in welcher Reihenfolge vorzugehen ist. Zum komplizieren des Verschlüsselungslvorganges kann beispielsweise der Wert einer Matrixzelle, welche die Verschlüsselungsinformation enthalten soll, nicht um einen konstanten Betrag, sondern um einen Betrag verändert werden, welcher über eine Funktion, beispielsweise wieder eine Chaosfunktion, bestimmt wird.

Je nach Vereinbarung zwischen Sender und Empfänger erhält der Empfänger im Anschluß nach inverser Anwendung des erfindungsgemäßen Verfahrens aus dem Informationsseparierungsbaustein die Information 1 oder 2 oder ein Gemisch davon, je nach Vereinbarung zwischen Sender und Empfänger. Die Information 1 kann beispielsweise in beliebiger Form, z.B. Text, Bilder, Audio, Video vorlegen. Sie wird dann beispielsweise zusammen mit einer Information 2 und dem Parameter einer rückgekoppelten Funktion in den Informationsüberlagerungsbaustein Kod eingespeist. Dort werden die Informationen überlagert. Das Ergebnis ist eine Informationsmenge info, in der Informationen 1 und 2 in einheitlicher, nicht unterscheidbarer Form vorliegen, es sei denn, der Informationsseparierungsbaustein dekod wird damit benutzt.

Figur 2 gibt ein Beispiel zur Verschlüsselung und Entschlüsselung der nach dem erfindungsgemäßen Verfahren an. Das Verfahren startet in einer Zelle ST. Anschließend wird ein Block IN durchlaufen, bei dem beispielsweise die Information in Form von zahlenkodierten Informationseinheiten eingegeben wird. Im Block 2 Kod, wird die Information gemäß dem Informationsüberlagerungsbaustein Kod kodiert, wie dies in der Beschreibung von Figur 1 dargelegt wurde. Anschließend wird die verschlüsselte Informationin einem Baustein STOR gespeichert, so daß sie in der Folge übertragen werden kann. Dies entspricht der Informationsmenge Info aus Figur 1. Anschließend folgt der Transfer TRANS zum Empfänger. Der Empfänger liest zunächst die verschlüsselte Information in einem Baustein RET ein. Anschließend wird diese einem Informationsseparierungsbaustein Dekod zugeführt. Dort erfolgt das Dekodieren der übertragenen Information. Wie in Figur 1 dargelegt wurde, erhält der Empfänger anschließend dekodierte Daten, also die Informationsfolge aus Informationseinheiten, die beim Sender aufgegeben wurde. Das Verfahren endet in einem Baustein END.

Überlagerungs- und Separierungsfunktionen können geeignete mathematische Funktionen mit komplexem Definitions- und Wertebereich sein (also Funktionen über komplexe Zahlen). Im Zusammenhang mit den Patentansprüchen wird hier in dieser Anmeldung auch von rückgekoppelten Funktionen gesprochen. Darunter sollen solche Funktionen verstanden werden, bei denen iterativ mehrmals die Funktion auf ihre eigenen Funktionswerte angewendet wird. Besonders sind solche Funktionen geeignet, welche ein chaotisches Verhalten aufweisen. Beim Einsatz einer flächigen Matrix unter Verwendung unter Verwendung von grauwertkodierten Bildern sind besonders solche Funktionen geeignet, die unsymmetrische Bilder liefern. Letztere sichern zu, daß trotz kleiner Parameteranzahl die überlagerte Informationsmenge ohne Kenntnis der Parameter nicht mit üblichen "brute force" Suchstrategien in ihren Bestandteilen repariert werden kann. Der Informationsüberlagerungsbaustein Kod und der Informationsseparierungsbaustein Dekod (sowie ihre Komponenten in allen Varianten), können gänzlich kombiniert sowohl als Hardwarebausteine (z.B. als ASIC), als Teile eines Hardwarebausteins, etwa in einem Smartcard-Chip) oder als reine Softwaremodul realisiert werden.

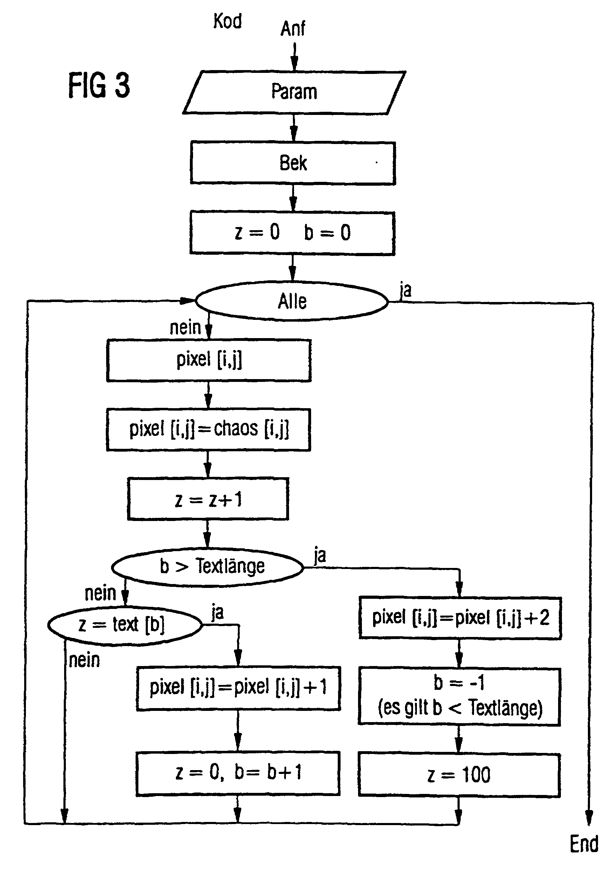

In einer Ausführungsvariante der Erfindung soll beispielsweise ein Text in einem Bild versteckt werden. Beispielsweise besteht dieser Text in zahlenkodierten Informationseinheiten, wobei diese Informationseinheiten Buchstaben sind, welche mittels des ASCII-Kodes kodiert sind. Der ASCII-Kode bildet beispielsweise dabei die Information 1 aus Bild 1. Die Matrix wird beispielsweise zweidimensional gewählt und es wird ein Bild erzeugt mit Hilfe einer chaotischen Funktion, das als Pixelgraphik, z.B. mit einer Tiefeninformation 256 pro Pixel aus den vorgegebenen Parametern erzeugt wird. Beispiele für die Erzeugung solcher Bilder aus chaotischen Informationen sind im Buch von Peitgen/Richter: The Beauty of Fractals , S. 189 - 193 angegeben. Der Algorithmus des Informationskombinationsbausteins Kod belegt die Pixel des erzeugten Bildes (eine Pixelmatrix) in einer geeigneten Reihenfolge mit Werten der Chaosfunktion. Beispielsweise zählt der Informationskombinationsbaustein die eingetragenen Pixel. Erreicht dieser Zähler den Integer-Wert des nächsten zu kodierenden ASCII-Zeichens, dann wird der aktuelle Pixelwert beispielsweise um 1 erhöht oder erniedrigt und der Zähler, welche die Pixel zählt, auf Null gesetzt. Dies ist beispielsweise im Flußdiagramm in Figur 3 dargestellt. Am Ergebnis ist ohne Kenntnis der Parameter der Chaosfunktion und des Kombinierungsbausteins nie zu erkennen, bzw. systematisch herauszufinden, welche von den chaotisch verteilten Pixeln gegenüber ihrem Vorgängerpixel eine Graustufe zu viel besitzen. Das heißt es ist völlig unmöglich, ohne die Kenntnis der Funktionsparameter und der Grundmatrix herauszufinden, welche Pixelwerte, d.h. Grauwerte oder Farbwerte verändert wurden. Der Empfänger der überlagerten Information kann dann, bei Kenntnis der Parameter der Chaosfunktion und des Verknüpfungsalgorithmus im Kombinierungsbaustein mit Hilfe des Separierungsbausteins Dekod den ASCII Text aus dem Bild separieren. Das heißt jedesmal, wenn ein übersprungener Tiefenwert, d.h. Grauwert oder Farbwert gefunden wird, ist dem Empfänger klar, daß sich damit eine Kodierung eines ASCII-Zeichens verbindet. Sein Integer-Wert entspricht beispielsweise genau der Anzahl der durch den Algorithmus belegten Pixel, die zwischen dem letzten kodierten Zeichen (oder dem ersten belegten Pixel) und diesem Pixel liegen.

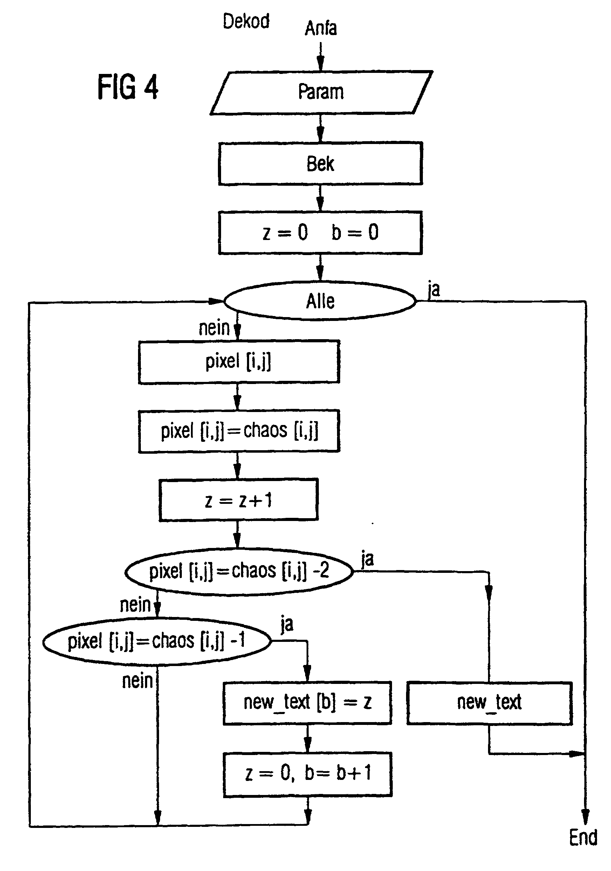

Besonders wichtig ist es bei der erfindungsgemäßen Vorgehensweise zu berücksichtigen, daß nicht zwangsweise genau eine Tiefe eines Pixels übersprungen werden muß. Es kann genausogut eine andere feste Zahl sein (z.B. werden jedesmal drei Grau- oder Farbstufenwerte ausgelassen), oder sogar durch eine Funktion bestimmte Folge, z.B. beim ersten ASCII-Zeichen überspringe einen Tiefenwert, beim zweiten zwei Tiefenwerte usw. und so fort). Noch schwieriger und komplexer kann das erfindungsgemäße Verfahren durchgeführt werden, wenn diese Funktion selbst eine Chaosfunktion darstellt. Der Auslassungswert wird dann beispielsweise im Informations-Kombinationsbaustein durch die Überspringfunktion U und einen Anfangswert um Null bestimmt. Beispielsweise kann bei der hier vorgestellten Ausführungsvariante des erfindungsgemäßen Verfahrens der Zähler des Informationsbausteins Kod auch anders gewählt werden. Es muß jedoch gewährleistet sein, daß jeder Text in einem oder mehreren nicht zu großen Bildern kodierbar ist. Der Zähler erfüllt diese Bedingung, wenn folgendes gilt: Man lege eine geeignete Zahl n fest. Nach jeweils n belegten Pixeln muß jeder Integer-Wert eines ASCII-Zeichens mindestens einmal Funktionswert gewesen sein. Konkreter wird das für die Informationsüberlagerung in Figur 3 und für die Informationsseparation in Figur 4 dargestellt. Generell ist eine automatische Komprimierung der Chaosbilder möglich, um beispielsweise die Übertragungskosten zu senken. Eine weitere Variante des erfindungsgemäßen Verfahrens kann beispielsweise darin bestehen, daß ein solches Bild lediglich die Grauwerte Null und Eins aufweist und in einem anderen Bild, versteckt wird, um so zu verheimlichen, daß Information mit diesem Bild übertragen wird. Beispielsweise ist wie zuvor geschildert ein Text in ein Bild kodiert worden, das jedoch lediglich die Grauwerte Null und Eins aufweist. Die so verschlüsselte Information soll nun beispielsweise in einem Bild versteckt werden, das beispielsweise als Pixelgraphik mit Tiefeninformation von 1024 vorliegt. Durch ein einfache Überlagerung der beiden Bilder in einem Informationsüberlagerungsbaustein wird nun das kodierte Bild wie ein Wasserzeichen an einen oder mehreren Stellen in dem Bild mit der hohen Grauwert- oder Farbwertabstufung eingewoben. Durch das geringe Delta, nur zwei Grauwerte 0 und 1, mit welchem die Information in dem Ursprungsbild kodiert wurde, wird das Bild mit der großen Informationstiefe nicht beeinflußt oder nur unmerklich beeinflußt. Beispielsweise werden dazu im Informationsüberlagerungsbaustein die beiden Bilder einfach addiert oder subtrahiert. Das heißt überall wo Bild 2 einen Pixelwert 1 hatte, ist die Tiefeninformation in Bild 1 um 1 verringert oder 1 erhöht. Diese Veränderung kann man dem überlagerten Bild nicht ansehen und die Stellen ohne Kenntnis der Parameter der Chaosfunktion und des Überlagerungsbausteins nicht systematisch herausfinden. Besteht nun diese Kenntnis der Parameter der Chaosfunktion und des Überlagerungsbausteins, so kann man einen Prüfbaustein realisieren, der testet, ob das Wasserzeichen in einem Bild enthalten ist. Damit könnte man z.B. vorzugsweise Copyrightrechte überprüfen, wenn der Verdacht besteht, daß jemand Bilder oder andere Multimediainformation ohne Genehmigung benutzt. Das Wasserzeichen ist dann, wie bei Geldscheinen der Beweis für die Herkunft des Bildes (bei echten Geldscheinen wäre das eine Bundesdruckerei). Andere Möglichkeiten sind, Firmenlogos etc. als Wasserzeichen einzuweben. Um zu verhindern, daß unberechtigte Nutzer eigene Wasserzeichen in geschützte Daten kopieren, werden Urheberrechte z.B. überwacht. Beispielsweise ist eine Anwendung denkbar, bei der bei bestimmten Behörden/Instituten Datenbanken existieren, in denen Urheberrechte gesammelt werden, z.B. die Parameter des Wasserzeichens, das Datum der Aufnahme in die Datenbank und ein Ausschnitt aus den geschützten Daten). Werden dann mehrere Wasserzeichen einer Datenquelle gefunden, so können die Urheberrechte überprüft werden. Solche Datenbanken könnten auch im Internet angelegt sein. Beispielsweise könnten dort Autoren ihre Urheberrechte speichern. Änderungen in älteren Daten dieser Datenbanken dürfen jedoch nur mit Berechtigung möglich sein.

Wie bei der Beschreibung der ersten Anwendungsvariante gilt, daß beliebige Funktionen im Informationsüberlagerungsbaustein verwendbar sind, nicht nur die oben als Beispiel gewählte Subtraktion. Zum Beispiel könnte das Pixel wechselweise subtrahiert oder addiert werden oder jedes fünfte Pixel addiert und alle anderen subtrahiert, usw.. Es ist auch nicht zwangsweise nötig, daß das Wasserzeichenbild nur die Pixeltiefe 1 aufweist. Jede Zahl ist möglich, wobei sie nicht so groß sein sollte, damit im Gesamtbild die Differenz der Umgebung nicht sichtbar wird.

Es sind auch andere Ausführungsformen des Informationsseparationsbausteins denkbar. Beispielsweise können zur Verschlüsselung Nachrichten oder Nachrichtenströme, multimediale Datenlängen (Bilder, Videos, Musik-CD-Inhalte, Software-Programme, Spiele, usw.), Wertsystemsurrogate (z.B. elektronisches Geld, elektronische Briefmarken) usw. dienen.

Der Informationsseparationsbaustein kann beispielsweise als Informationsfilter dienen. Mit der Ausprägung des Informationsseparationsbausteins als Informationsfilter kann zugesichert werden, daß bestimmte Nachrichten oder Informationen nur von berechtigten Leuten oder Anwenderprogrammen gelesen werden können. Dadurch kann z.B. die Privatsphäre des Individuums besser geschützt werden. Als Informationsseparierungsbaustein ist vor allen die Variante 1 geeignet. Beispielsweise können einem Informationsseparierungsbaustein zur Authentifikation verschiedene Nachrichten oder digitale Datenströme zugeführt werden und es kann in ihm überprüft werden, ob ein bestimmtes Wasserzeichen an bestimmten Zellen der übertragenen Information vorliegt und falls dies der Fall ist, kann die Information an den Empfanger weitergeleitet werden, falls dies nicht der Fall ist, kann eine weitere Verarbeitung der Information gesperrt werden. Beispielsweise können auch hierarchische Zugriffsfilter realisiert werden, bei denen unterschiedliche Wasserzeichen bzw. eingeholte Information als Kennung zur Separierung der unterschiedlichen Hierarchien dienen. Weitere Anwendungsbeispiele bei denen Authentifikation mit Hilfe eines Wasserzeichens, welches in die Datenströme eingewoben wird, möglich ist, werden im folgenden angegeben:
- Systeme zum Empfang von zahlungspflichten TV- und Video bzw. Audioinhalten -
- Computerspiele -
- Präsentationsunterlagen -
- elektronisch verfügbare Bücher, Zeitungen, Nachschlagwerke, Recherchensysteme -
- Zugangssysteme als das wären Autos, Haustüren, Gebäude schließanlagen. Dabei können personenbezogene Informationen (Kodekarten-Pins und ähnliches) mit objektbezogenen Informationen (Schlüsselnummern, Motorblocknummern) überlagert und beim Zugangs- oder Zugriffsversuch geprüft werden. Unter anderem könne man beispielsweise solche Nummern auch als Parameter oder Parameterteile der komplexen Funktion im Informationüberlagerungsbaustein benutzen.

Figur 3 zeigt eine einfache Verschlüsselung von zahlenkodierten Informationseinheiten nach dem erfindungsgemäßen Verfahren. Die Verschlüsselung beginnt bei ANF. Im Baustein Param werden die der Verschlüsselung zugrundeliegenden Parameter durch den Anwender eingegeben. Im Baustein Bel erfolgt beispielsweise das Belegen der Matrix mit den aus der Chaosfunktion generierten Werten. Anschließend wird hier bei der Verwendung einer flächigen Matrix beispielsweise der Pixelzähler z und der ASCII-Zähler b auf Null gesetzt. Anschließend werden die einzelnen Pixel des Chaosbildes abgearbeitet. Zunächst wird abgefragt, ob bereits alle Pixel belegt wurden. Falls dies nicht der Fall ist, belegt das erfindungsgemäße Verfahren zunächst alle Pixel mit Hilfe der Chaosfunktion und der zugrundeliegenden Parameter mit Werten. Dies wird hier nur für den flächigen, also den zweidimensionalen Fall beschrieben. Es sind jedoch noch mehrdimensionale Anwendungen denkbar, die vom Fachmann in analoger Weise ausgeführt werden können. In der Folge des Ablaufs des Verfahrens wird weiterhin überprüft, ob bereits der gesamte Text eingegeben wurde und verschlüsselt wurde, falls dies nicht der Fall ist, wird solange vorgegangen bis der vollständige Text abgearbeitet wurde. Anschließend wird der verschlüsselte Text bzw. die Matrix ausgegeben bei IND.

Figur 4 gibt ein Beispiel für den Informationsseparationsvorgang nach dem erfindungsgemäßen Verfahren an. Die gleich bezeichneten Bausteine führen auch dieselben Aktionen durch, die bei Figur 3 erklärt wurden. Ansonsten wird in umgekehrter Weise wie bei Figur 3 vorgegangen um die Kodezahl der verschlüsselten Buchstaben, also die ASCII-Zahlen zu erhalten.

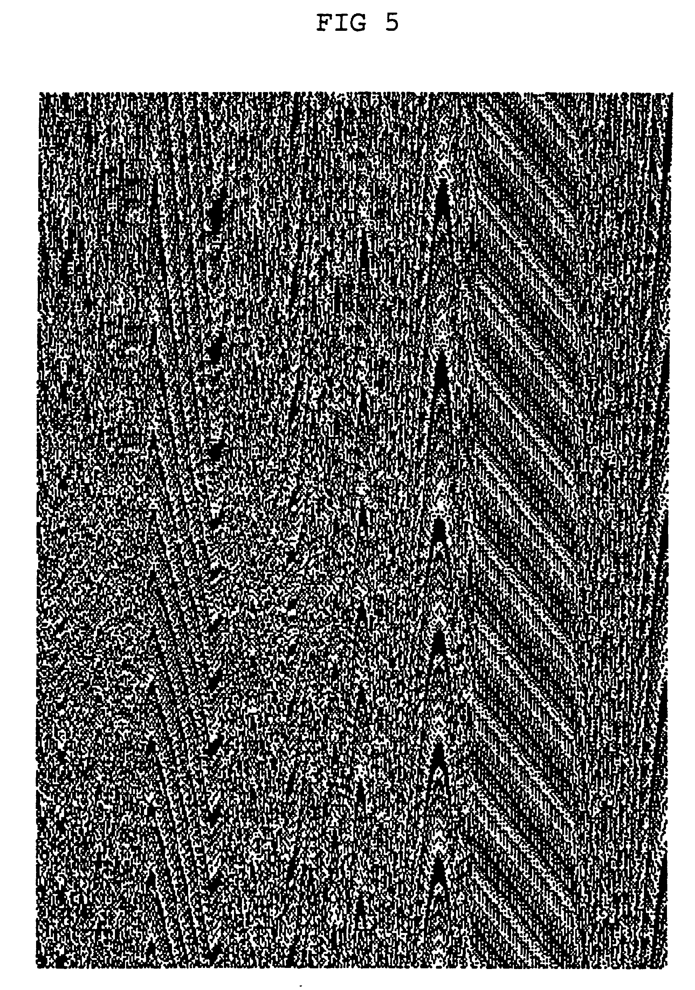

Figur 5 zeigt ein Bild das mit Hilfe einer Chaosfunktion erzeugt wurde und das keine nach dem erfindungsgemäßen Verfahren kodierte Information enthält.

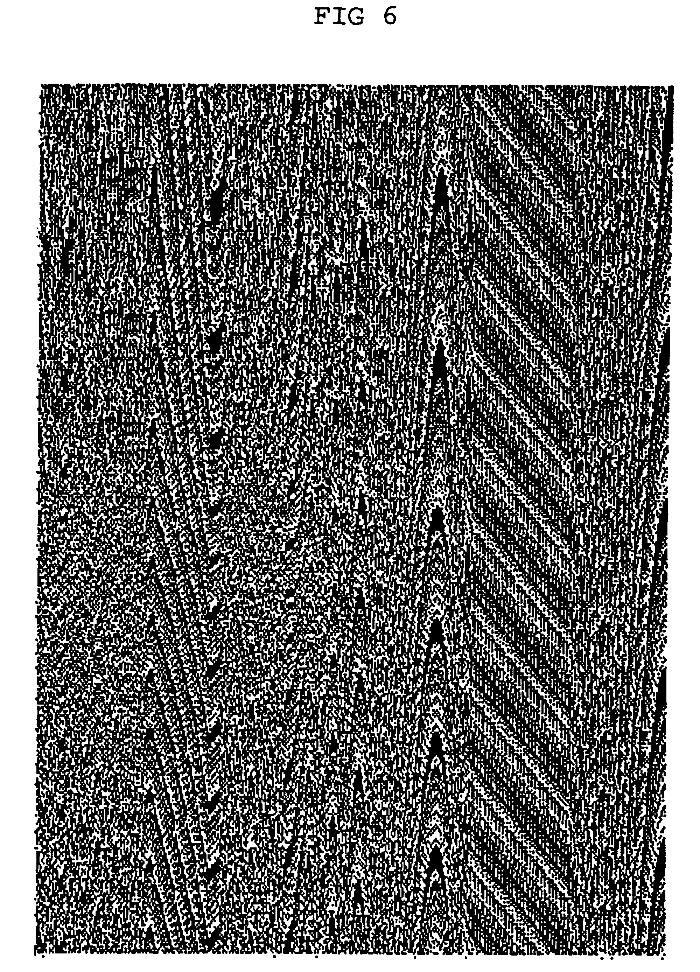

Figur 6 zeigt dasselbe Bild wie in Figur 5, das sich lediglich dadurch unterscheidet, daß dem erfindungsgemäßen Verfahren ein Text in dieses Bild hineinkodiert wurde. Wie man sofort erkennen kann, erscheinen diese beiden Bilder für den oberflächlichen Betrachter als identisch. Ohne Kenntnis der Funktionsparameter der Chaosfunktion und der entsprechenden Werte mit denen die einzelnen Matrixzellen, sprich hier die Grauwerte der jeweiligen Pixel verändert wurden, ist es einem Unberechtigten nicht möglich, die Information zur entschlüsseln, die in diesem Bild enthalten ist.

## Patentansprüche

1. Verfahren zur Verschlüsselung von Folgen, die aus zahlenkodierten Informationseinheiten bestehen,
a) bei dem eine mindestens zweidimensionale Matrix in der Form mit Werten belegt wird, daß der einer jeweiligen Zelle der Matrix zugeordnete Wert ermittelt wird, indem auf mindestens einen Zellenindex, welcher die Position der Zelle in der Matrix angibt, mindestens einmal eine erste rückgekoppelte Funktion angewendet wird,
b)bei dem zur Verschlüsselung der ersten Informationseinheit aus der Folge der Wert jener Matrixzelle verändert wird, deren Position innerhalb der Matrix durch Anwendung einer reversiblen Funktion auf die Kodezahl der ersten Informationseinheit errechnet wird
und bei dem zur Verschlüsselung der zweiten Informationseinheit aus der Folge der Wert jener Matrixzelle verändert wird, deren Position innerhalb der Matrix durch Anwendung einer reversiblen Funktion auf die Kodezahl der ersten und der zweiten Informationseinheit errechnet wird.

2. Verfahren nach Anspruch 1, bei dem zur Verschlüsselung der ersten Informationseinheit aus der Folge, ausgehend von einer Startzelle der Matrix die Zellenindices einer ersten Verschlüsselungszelle gefunden werden, indem die Zellenindices der Startzelle auf eindeutige und umkehrbare Weise mit der Kodezahl für die erste Informationseinheit verknüpft werden und bei dem zur Verschlüsselung der zweiten Informationseinheit aus der Folge der Wert jener Matrixzelle verändert wird deren Indices sich aus der Anwendung der eindeutigen umkehrbare Verknüpfung auf die erste Verschlüsselungszelle ergeben.

3. Verfahren nach einem der Ansprüche 1 oder 2, bei dem als rückgekoppelte Funktion eine Chaosfunktion Verwendung findet, wobei der erste Funktionswert zur Matrixwertebelegung verwendet wird, den die Funktion nach mehrmaliger iterativer rückgekoppelter Anwendung, abhängig vom Funktionsverlauf nach Über- oder Unterschreiten eines vorbestimmten Grenzwertes liefert.

4. Verfahren nach Anspruch 3, bei dem für den Fall das die Grenzwertbedingung nicht erfüllt werden kann derjenige Funktionswert zur Matrixwertebelegung verwendet wird, welcher sich nach einer vordefinierten Anzahl von Iterationen ergibt.

5. Verfahren nach einem der Ansprüche 2 bis 4, bei dem zur Berechnung der Matrixindices der ersten Verschlüsselungszelle die Kodezahl der ersten Informationseinheit zu mindestens einem der Matrixindices addiert wird.

6. Verfahren nach einem der vorangehenden Ansprüche, bei dem zur Verschlüsselung, als Verschlüsselungswert der Wert einer jeweiligen Verschlüsselungszelle um die Zahl 1 verändert wird.

7. Verfahren nach einem der Ansprüche 1 bis 5, bei dem der aktuelle Verschlüsselungswert von der Anzahl der bereits verschlüsselten Informationseinheiten abhängt.

8. Verfahren nach einem der Ansprüche 1 bis 5, bei dem der aktuelle Verschlüsselungswert mit einer Chaosfunktion bestimmt wird.

9. Verfahren nach einem der vorangehenden Ansprüche, bei dem die Matrix mit den darin enthalten Werten als zweidimensionale Matrix zur Erstellung eines Bildes verwendet wird, wobei die je Matrixzelle gespeicherten Werte als Farb- und/oder Grauwerte dienen.

10. Verfahren nach Anspruch 9, bei dem der Verschlüsselungswert mit der Zahl der absolut möglichen Farb- oder Grauwerte skaliert wird.

11. Verfahren nach einem der vorangehenden Ansprüche, bei dem zur Authentifikation, beziehungsweise Identifikation die Matrix auf einem beliebigen Bildmedium aufgebracht wird.

12. Verfahren nach einem der vorangehenden Ansprüche, bei dem zur Authentifikation, beziehungsweise Identifikation die Matrix einem beliebigen Bilddatensatz hinzugefügt wird.

13. Verfahren zur Entschlüsselung einer verschlüsselten Folge nach einem der vorangehenden Ansprüche ,
a) bei dem zur Entschlüsselung die Art der Matrix bekannt gemacht wird und diese wie beim Verschlüsseln in Kenntnis der ersten rückgekoppelten Funktion und der Art ihrer Anwendung mit Werten belegt wird, so daß sich eine Ausgangsmatrix ergibt,
b)bei dem die verschlüsselte Folge Wert für Wert mit der Ausgangsmatrix verglichen wird, um veränderte Werte festzustellen
und bei dem zur Entschlüsselung eines ersten veränderten Wertes die inverse reversible Funktion auf die Matrixindices angewendet wird und so die Kodezahl der ersten Informationseinheit gefunden wird, wobei für einen zweiten veränderten Wert in umgekehrte Reihenfolge wie beim Verschlüsseln analog vorgegangen wird.

## Claims

1. Method for encrypting sequences which comprise numerically coded information units,
a) in which values are put into an at least two-dimensional matrix such that the value associated with a respective cell in the matrix is ascertained by virtue of a first fed-back function being applied at least once to at least one cell index which indicates the position of the cell in the matrix,
b) in which the first information unit from the sequence is encrypted by altering the value of that matrix cell whose position within the matrix is calculated by applying a reversible function to the code number of the first information unit,
and in which the second information unit from the sequence is encrypted by altering the value of that matrix cell whose position within the matrix is calculated by applying a reversible function to the code number of the first and second information units.

2. Method according to Claim 1, in which the first information unit from the sequence is encrypted by finding, starting from a starting cell on the matrix, the cell indices for a first encryption cell by logically combining the cell indices for the starting cell in a clear and reversible manner with the code number for the first information unit, and in which the second information unit from the sequence is encrypted by altering the value of that matrix cell whose indices are obtained from applying the clear reversible logic combination to the first encryption cell.

3. Method according to one of Claims 1 or 2, in which the fed-back function used is a chaos function, where the first function value is used for matrix-value assignment and is delivered by the function following repeated iterative fed-back application, depending on the course of the function after a predetermined limit value has been exceeded or undershot.

4. Method according to Claim 3, in which, if the limit-value condition cannot be satisfied, the function value used for matrix-value assignment is that which is obtained after a predefined number of iterations.

5. Method according to one of Claims 2 to 4, in which the matrix indices for the first encryption cell are calculated by adding the code number of the first information unit to at least one of the matrix indices.

6. Method according to one of the preceding claims, in which encryption is performed by altering, as the encryption value, the value of a respective encryption cell by the number 1.

7. Method according to one of Claims 1 to 5, in which the current encryption value is dependent on the number of information units already encrypted.

8. Method according to one of Claims 1 to 5, in which the current encryption value is determined using a chaos function.

9. Method according to one of the preceding claims, in which the matrix with the values it contains is used as a two-dimensional matrix for creating an image, with the values stored for each matrix cell being used as colour values and/or grey values.

10. Method according to Claim 9, in which the encryption value is scaled using the number of absolutely possible colour values or grey values.

11. Method according to one of the preceding claims, in which authentication, or identification, is performed by putting the matrix on any image medium.

12. Method according to one of the preceding claims, in which authentication, or identification, is performed by adding the matrix to any image data record.

13. Method for decrypting an encrypted sequence according to one of the preceding claims,
a) in which decryption is performed by revealing the type of matrix and assigning values to it, as in the case of encryption, in the knowledge of the first fed-back function and the type of its application, so that an output matrix is obtained,
b) in which the encrypted sequence is compared value for value with the output matrix in order to establish any altered values,
and in which a first altered value is decrypted by applying the inverse reversible function to the matrix indices and in this way finding the code number of the first information unit, the procedure being similar for a second altered value in the opposite order to that for encryption.

## Revendications

1. Procédé de codage de séquences composées d'unités de données à codage numérique,
a) dans lequel une matrice au moins bidimensionnelle est affectée de valeurs, sous telle forme que la valeur attribuée à une ligne respective de la matrice est déterminée en utilisant une première fonction rétroactive au moins une fois sur au moins un index de cellule, lequel indique la position de la cellule dans la matrice,
b) dans lequel, pour le codage de la première unité de données de la séquence, la valeur de la cellule matricielle, dont la position à l'intérieur de la matrice est calculée par l'application d'une fonction réversible au chiffe codé de la première unité de données, est modifiée,
et dans lequel, pour le codage de la deuxième unité de données de la séquence, la valeur de la cellule matricielle, dont la position à l'intérieur de la cellule matricielle est calculée par l'application d'une fonction réversible au chiffre codé de la première et de la deuxième unité de données, est modifiée.

2. Procédé selon la revendication 1, dans lequel, pour le codage de la première unité de données de la séquence, partant d'une cellule matricielle initiale, les indices de cellules d'une première cellule de codage sont trouvés en associant les indices de cellules de la cellule initiale, de manière univoque et réversible, au chiffre codé pour la première unité de données, et dans lequel, pour le codage de la deuxième unité de données de la séquence, la valeur de la cellule matricielle, dont les indices résultent de l'application de l'association univoque réversible à la première cellule de codage, est modifiée.

3. Procédé selon l'une quelconque des revendications 1 ou 2, dans lequel une fonction de chaos est utilisée comme fonction rétroactive, la première valeur de fonction, que la fonction fournit après une application rétroactive itérative multiple, étant utilisée pour l'affectation des valeurs de la matrice, en fonction de l'allure de la fonction après le dépassement positif ou négatif d'une valeur limite prédéterminée.

4. Procédé selon la revendication 3, dans lequel, au cas où la condition de la valeur limite ne peut pas être remplie, la valeur de fonction résultant après un nombre prédéfini d'itérations, est utilisée pour l'affectation des valeurs de la matrice.

5. Procédé selon l'une quelconque des revendications 2 à 4, dans lequel le chiffre de code de la première unité de données est additionné à au moins l'un des indices de la matrice pour le calcul des indices matriciels de la première cellule de codage.

6. Procédé selon l'une quelconque des revendications précédentes, dans lequel la valeur d'une cellule respective de codage, comme valeur de codage, est modifiée du chiffre 1 pour le codage.

7. Procédé selon l'une quelconque des revendications 1 à 5, dans lequel la valeur de codage actuelle dépend du nombre d'unités de données déjà codées.

8. Procédé selon l'une des revendications 1 à 5, dans lequel la valeur de codage actuelle est déterminée au moyen d'une fonction de chaos.

9. Procédé selon l'une des revendications précédentes, dans lequel la matrice, avec les valeurs qui y sont contenues, est utilisée comme matrice bidimensionnelle pour la création d'une image, les valeurs mémorisées pour chaque cellule matricielle servant de valeurs de couleur et/ou de valeurs de gris.

10. Procédé selon la revendication 9, dans lequel la valeur de codage est graduée au moyen du nombre des valeurs de couleur ou de gris absolument possibles.

11. Procédé selon l'une quelconque des revendications précédentes, dans lequel, la matrice est appliquée sur n'importe quel milieu d'image pour l'authentification resp. l'identification.

12. Procédé selon l'une quelconque des revendications précédentes, dans lequel la matrice est ajoutée à n'importe quel enregistrement de données d'image pour l'authentification resp: l'identification.

13. Procédé de décodage d'une séquence codée, selon l'une quelconque des revendications précédentes
a) dans lequel le type de matrice est mis à la connaissance pour le décodage et dans lequel cette matrice, comme pour le codage, est affectées avec des valeurs en ayant connaissance de la première fonction rétroactive et de son type d'application, de sorte qu'il en résulte une matrice de sortie,
b) dans lequel la séquence codée est comparée valeur par valeur à la matrice de sortie afin de constater les valeurs modifiées
et dans lequel, pour le décodage d'une première valeur modifiée, la fonction réversible inverse est appliquée aux indices matriciels et le chiffre codé de la première unité de données est ainsi trouvé, un processus analogue en sens inverse du codage étant utilisé pour une deuxième valeur modifiée.
